# EUROPÄISCHE PATENTSCHRIFT

(11) **EP 0 842 569 B1**
(45) Veröffentlichungstag und Bekanntmachung des Hinweises auf die Patenterteilung: **22.09.1999**
(21) Anmeldenummer: 96929171.5
(22) Anmeldetag: 24.07.1996
(51) Int. Cl.: H04B 1/707, H04B 7/26

(54) **VERFAHREN UND ANORDNUNG ZUR VERMINDERUNG VON GLEICHKANALSTÖRUNGEN IN ZELLULAR AUFGEBAUTEN JD-CDMA-FUNKSYSTEMEN**
PROCESS AND DEVICE FOR REDUCING COMMON CHANNEL INTERFERENCE IN CELLULAR JD-CDMA RADIO SYSTEMS
PROCEDE ET DISPOSITIF POUR REDUIRE LES PERTURBATIONS SUR VOIES COMMUNES DANS DES SYSTEMES RADIOPHONIQUES CELLULAIRES JD-CDMA

(30) Priorität: 01.08.1995 DE 19528207
(43) Veröffentlichungstag der Anmeldung: 20.05.1998
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: DE9601368
(87) Internationale Veröffentlichungsnummer: WO9705707

(56) Entgegenhaltungen:
- 1995 IEEE 45TH VEHICULAR TECHNOLOGY CONFERENCE. COUNTDOWN TO THE WIRELESS TWENTY-FIRST CENTURY (CAT. NO.95CH35821 AND 95CB35821), 1995 IEEE 45TH VEHICULAR TECHNOLOGY CONFERENCE. COUNTDOWN TO THE WIRELESS TWENTY-FIRST CENTURY, CHICAGO, IL, USA , 25.Juli 1995 - 28.Juli 1905, ISBN 0-7803-2742-X, 1995, NEW YORK, NY, USA, IEEE, USA, Seiten 469-473 vol.1, XP000550217 JUNG P ET AL: "A joint detection CDMA mobile radio system concept developed within COST 231"
- IEEE JOURNAL ON SELECTED AREAS IN COMMUNICATIONS, MAY 1994, USA, Bd. 12, Nr. 4, ISSN 0733-8716, Seiten 568-579, XP000588834 BLANZ J ET AL: "Performance of a cellular hybrid C/TDMA mobile radio system applying joint detection and coherent receiver antenna diversity" in der Anmeldung erwähnt
- IEEE JOURNAL ON SELECTED AREAS IN COMMUNICATIONS, MAY 1994, USA, Bd. 12, Nr. 4, ISSN 0733-8716, Seiten 568-579, XP000588834 BLANZ J ET AL: "Performance of a cellular hybrid C/TDMA mobile radio system applying joint detection and coherent receiver antenna diversity"

## Beschreibung

Die Erfindung bezieht sich auf ein Verfahren gemäß dem Oberbegriff des Patentanspruchs 1.

Die Erfindung betrifft auch eine Anordnung zur Durchführung dieses Verfahrens.

Die Erzielung der optimalen Wirtschaftlichkeit in zellular aufgebauten Funksystemen, insbesondere Mobilfunksystemen, hängt von der Zahl der Basisstationen, die ein Netzbetreiber zur Funkversorgung eines Gebietes mit hoher Verkehrsdichte und einem vorgegebenen Verkehrsaufkommen erstellen und warten muß, direkt ab. Ein Optimum ist dann erreicht, wenn das zur Verfügung stehende Frequenzband-, d.h. das Funkkanalvolumen auf eine minimale Anzahl von Basisstationen verteilt wird und damit eine hohe Anzahl von Funkkanälen pro Basisstation wiederbenutzt werden kann. Dies bedeutet, daß die Erzielung eines geringen Clustermaßes, welches die Zahl von Funkzellen ausdrückt, auf die das gesamte zur Verfügung stehende Frequenzband zur Erzielung einer hinreichend geringen eigenverursachten Gleichkanalstörung verteilt werden muß, von hoher Wichtigkeit ist. Das Clustermaß kann um so geringer sein, je größer die Gleichkanalstörfestigkeit des Funkübertragungsverfahrens ist und je mehr es gelingt, systemtechnische Maßnahmen zur Verringerung der Gleichkanalstörung einzuführen.

Damit kommt der Gleichkanalstörfestigkeit des in einem zellularen Funksystem verwendeten Funkübertragungsverfahrens die grundsätzliche Bedeutung zu, ein für die Wirtschaftlichkeit eines Systems ausschlaggebender Faktor zu sein: Je höher die Gleichkanalstörfestigkeit des Funkübertragungsverfahrens ist, desto dichter kann das gleiche Frequenzband wiederbenutzt werden und desto geringer ist folglich die in einem Versorgungsbereich für eine vorgegebene Verkehrsdichte erforderliche Zahl der Basisstationen.

Die bekannten Funkübertragungverfahren besitzen durchwegs eine sehr unterschiedliche Gleichkanalstörfestigkeit. Eine sehr geringe Gleichkanalstörfestigkeit haben z.B. Amplitudenmodulationsverfahren, während Frequenzmodulationsverfahren und ähnliche Verfahren eine sehr viel höhere Störfestigkeit aufweisen.

Ein hohes Maß an Gleichkanalstörfestigkeit besitzen die als Spreizcode-Verfahren bekannten CDMA-Verfahren (CDMA = Code Division Multiple Access). Bei CDMA-Verfahren kann eine Vielzahl von Nutzverbindungen auf den gleichen HF(Hochfrequenz)-Frequenzbändern gleichzeitig abgewickelt werden. Dazu wird jedes der Nutzsignale mit einem unterschiedlichen Sendecode um einen bestimmten Faktor in der Frequenzachse gespreizt und am Empfangsort mit einem zum sendeseitig aufgebrachten Code inversen Empfangscode wieder komprimiert. Der Gewinn an Gleichkanalstörfestigkeit entspricht dem Spreizfaktor.

Durch diese Bandspreizung wird die Übertragungsbandbreite zwar um den Spreizfaktor erhöht, die Frequenzökonomie bleibt aber dadurch gewahrt, daß entsprechend viele Nutzsignale parallel in den Frequenzbändern übertragen werden können.

Ein bekanntes CDMA-Verfahren ist das so bezeichnete Direct Sequence(DS)-Verfahren. Bei diesem sogenannten DS-CDMA-Verfahren werden in allen Funkzellen die gleichen Frequenzbänder, jedoch unterschiedliche Spreizcodes benutzt. Die wichtigste Voraussetzung für die Trennung der Signale beim Empfang ist die hinreichende Gleichheit der Pegel aller Nutzsignale am Empfangsort. Sobald auch nur eines der Signale einen um den Spreizfaktor höheren Pegel erreicht, kann keines der überdeckten Nutzsignale mehr empfangen werden.

Diese für das Funktionieren des Systems erforderliche Gleichheit der Empfangspegel, die zwischen den in untereinander unterschiedlichen Entfernungen von den Basisstationen operierenden Funkstationen, insbesondere Mobilfunkstationen, aufgrund der Entfernungsabhängigkeit der Funkfelddämpfungen Differenzen von 80 bis 90 dB aufweisen, muß durch einen extrem schnellen und exakt arbeitenden Regelmechanismus fortwährend sichergestellt werden. Um dabei durch die auf den gleichen Frequenzbändern arbeitenden Einrichtungen in den unmittelbar benachbarten Zellen nicht gestört zu werden, muß die schnelle Regelung noch mit einen ebenfalls extrem schnellen Verbindungsumschaltmechanismus (Soft Handover) ergänzt werden. Dies ist notwendig, damit solche Mobilstationen, die aufgrund ihrer Bewegung und ihrer momentanen Wellenausbreitungssituation in einer ihrer Nachbarzellen einen unzulässig hohen Empfangspegel verursachen oder die Signale einer Nachbarzelle stärker empfangen als die der eigenen Zelle, verzugsfrei umgeschaltet und ohne Verzögerung auf den jeweils richtigen Pegel eingestellt werden können.

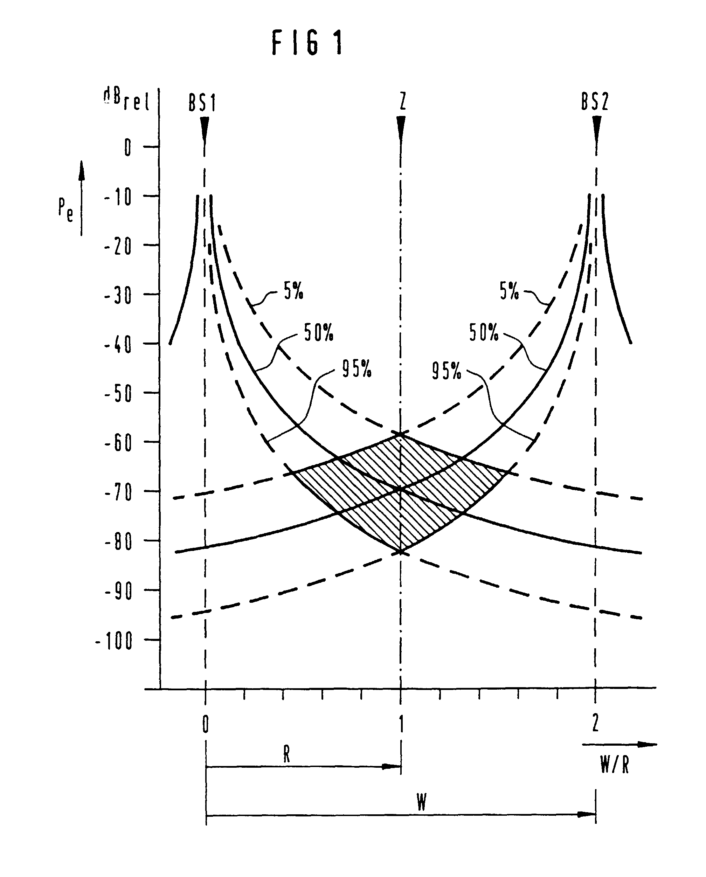

Fig. 1 zeigt dazu den Verlauf der Verteilungswahrscheinlichkeit und die gegenseitige Durchdringung der unter Einfluß der Funkfelddämpfung entstehenden relativen Empfangspegel Pₑ (dBᵣₑₗ) für den Funkversorgungsbereich zweier Basisstationen BS1 und BS2 bei Benutzung des gleichen Nutzfrequenzbandes in beiden Basisstationen BS1 und BS2. An der Abszisse ist die relative Entfernung als Wiederbenutzungsabstand W/R aufgetragen. Der Zellradius R bezeichnet die Zellgrenze Z zwischen den Bodenstationen BS1 und BS2. Die dargestellten Linien sind Parameter für die Ortswahrscheinlichkeit des entfernungsabhängigen Empfangspegels Pₑ. Die mittleren, durchgezogenen Linien stellen jeweils die 50%-Ortswahrscheinlichkeitswerte dar, was bedeutet, daß an der Hälfte der Orte dieser Pegel erreicht und an der anderen Hälfte der Orte dieser Pegel unterschritten wird. Die oberen gestrichelten Linien stellen die 5%-Ortswahrscheinlichkeitswerte dar und bedeuten, daß an 5% der Orte dieser Pegel erreicht wird. Die unteren gestrichelten Linien stellen die 95%-Ortswahrscheinlichkeitswerte dar und bedeuten, daß an 95% der Orte dieser Pegel erreicht bzw. nur an 5% der Orte unterschritten wird.

Der Verlauf aller Linien ist bedingt durch die Ausbreitungsgesetze bei bodennaher Wellenausbreitung. Die mittlere Dämpfung des Empfangspegels ist bedingt durch die Beugungsdämpfung, die in logarithmischer Darstellung hierbei um ca. den Faktor 2 höher als die Dämpfung bei Freiraumausbreitung von 6 dB pro Entfernungsverdoppelung ist, und beträgt im mittleren Gelände ca. 12 dB pro Entfernungsverdoppelung. Die an der Ordinate aufgetragene Verteilung des Empfangspegels hat ihre Ursache in der Abschattungsdämpfung, die durch die relativ kurzwelligen Unregelmäßigkeiten des Geländes und der Bebauung verursacht wird. Die Abschattungdämpfung wird auch als Lognormal-Verteilung der Empfangsfeldstärke bezeichnet. Da in Fig. 1 aber deren logarithmisches Maß, der Empfangspegel, in dB dargestellt ist, äußert sich die Wahrscheinlichkeitsverteilung als Gauß-Verteilung, die im mittleren Gelände eine Standardabweichung von 7 dB besitzt. Folglich ergibt sich für den 5%-Wert bzw. für den 95%-Wert eine Abweichung von 11,5 dB vom 50%-Wert und 23 dB als Summentoleranz zwischen den 95%- und 5%-Werten.

Die sich gegenseitig durchdringenden Werte der Wahrscheinlichkeitsverteilung sind, bedingt durch die verschiedenen Standorte der Basisstationen, für jeden Ort auf der Abszisse bzw. für jeden Ort einer Mobilstation unkorreliert, weil die Signale aus unterschiedlichen Richtungen eintreffen.

Das schraffiert gezeichnete, rautenförmige Durchdringungsfeld der Parameter zwischen den Basisstationen BS1 und BS2 stellt einen für DS-Verfahren typischen Unsicherheitsbereich dar. Innerhalb dieses Durchdringungfeldes kann aufgrund der Benutzung des gleichen Nutzfrequenzbandes in den unmittelbar benachbarten Basisstationen BS1 und BS2 sowie der Unkorreliertheit der Pegelverteilung für keinen Ort verbindlich vorhergesagt werden, welches der Signale der beiden Basisstationen BS1 und BS2 mit höherem Pegel auftritt. Bei Bewegungen der Mobilstationen treten deshalb laufend und sporadisch gegenseitige Pegelübersteuerungen auf, die es notwendig machen, daß jede Mobilstation rechtzeitig und schnell die Basisstation wechselt, um die Empfangsfähigkeit durch die Übersteuerung der jeweils stärkeren Basisstation BS1 bzw. BS2 nicht zu verlieren. Damit die Mobilstationen bei dieser Umschaltung aber die bestehenden Verbindungen zu ihren Partnern nicht verlieren, müssen in der Infrastruktur des Netzes gleichzeitig schnelle Verbindungsumschaltungen zwischen den betroffenen Basisstationen durchgeführt werden.

Eine weitere Notwendigkeit für eine schnelle Umschaltung der Verbindungen ergibt sich auch aus der Empfangssituation an den Basisstationen. Da keine der Mobilstationen stärker empfangen werden darf als diejenige, die der größten Funkfelddämpfung unterliegt, müssen alle Mobilstationen ihre Sendeleistung so steuern, daß diese Bedingung eingehalten wird. Der an den Basisstationen zu erwartende Empfangspegel wird deshalb immer in der Nähe des niedrigst möglichen Wertes von ca. -80 dBᵣₑₗ liegen. Es ist deshalb nicht zu vermeiden, daß eine in der Nähe der Zellgrenze Z im Bereich einer Basisstation BS1 operierende Mobilstation, bedingt durch die Unkorreliertheit der Funkfelddämpfungen und deren Streubereich, von der Nachbar-Basisstation BS2 sehr viel stärker empfangen werden kann als von der Basisstation BS1, mit der sie in Verbindung steht, und den Empfänger der Nachbar-Basisstation BS2 in unzulässiger Weise, mit Unterbrechung aller seiner Nutzverbindungen, übersteuert. Um diese Unterbrechungen zu verhindern, müssen solche Situationen bereits im Entstehen erkannt werden und sofortige Umschaltungen erfolgen.

Die schnellen Umschaltmechanismen führen zu einem sehr großen Aufwand in der Infrastruktur. Weiterhin ist aus der Größe des Durchdringungbereichs in Fig. 1 zu erkennen, daß ein relativ hoher Prozentsatz von Mobilfunk-Teilnehmern, nämlich diejenigen, die sich im äußeren Teil der in erster Näherung kreisförmigen Funkzellen befinden, betroffen ist. Aus diesem Grund muß von der theoretisch möglichen Grenzlast des Systems immer eine relativ hohe Kapazitätsreserve frei bleiben, um diese spontanen Umschaltungen jederzeit durchführen zu können.

Die maximale Zahl der beim DS-CDMA-Verfahren in einem Nutzfrequenzband betreibbaren Signalquellen ist dadurch eingeschränkt, daß die Zahl der am Empfänger trennbaren Signalquellen begrenzt ist. Diese Begrenzung ist einerseits durch die mit zunehmender Zahl ansteigende Eigenstörung der im gleichen Nutzfrequenzband in der gleichen Funkzelle operierenden Teilnehmerstationen gegeben, die immer einen zur zuverlässigen Signaldetektion erforderlichen Eigenstörabstand erfordert. Andererseits müssen die oben genannten Reserven für die Teilnehmer, die aus Gründen der Vermeidung von Störungen und Unterbrechungen zwingend und fortwährend umgeschaltet bzw. übernommen werden müssen, in der maximal zulässigen Teilnehmerzahl enthalten sein, was die Zahl der pro Basisstation im Mittel zulässigen Teilnehmer erheblich reduziert. In allen unmittelbaren Nachbarzellen müssen außerdem unterschiedliche Spreizcodes verwendet werden, damit Detektionsfehler vermieden und die momentanen Aufenthaltszellen, von denen die störenden Teilnehmer übernommen werden müssen, erkannt werden können.

Eine neuartige Variante eines CDMA-Verfahrens stellt das sogenannte Joint Detection(JD)-Verfahren dar, das beispielsweise in DE 42 12 300 C2 oder in dem Aufsatz von J.Blanz, A. Klein, M.Naßhan und A. Steil "Performance of a Cellular Hybrid C/TDMA Mobile Radio System Applying Joint Detection and Coherent Receiver Antenna Diversity" in der Zeitschrift "IEEE Journal on Selected Areas in Communications", Vol. 12, No.4, May 1994, Seiten 568 bis 579 oder in dem Aufsatz von P. Jung und B. steiner (Seiten 469-473) "A joint detection CDMA mobile radio system concept developed within COST 231", beschrieben ist. Das JD-Verfahren unterscheidet sich vom DS-Verfahren dadurch, daß im Gegensatz zu letzterem nicht angestrebt wird, eine möglichst große Anzahl von Signalquellen mit hohen Spreizfaktoren auf der Breite eines Nutzfrequenzbandes zu übertragen. Vielmehr soll dagegen jeweils nur eine relativ geringe Zahl von Signalquellen mit entsprechend niedrigeren Spreizfaktoren pro Frequenzbandbreite betrieben werden. Aufgrund der niedrigeren Spreizfaktoren kann das gesamte verfügbare HF-Frequenzband in eine entsprechend höhere Zahl von Nutzfrequenzbändern unterteilt werden, was zu einer gleichen Nutzung des gesamten verfügbaren HF-Frequenzbandes führt. Weiterhin werden im Normalfall, wie bei den heute bereits bestehenden Mobilfunksystemen, die gleichen Funkkanäle in keiner der unmittelbar benachbarten Funkzellen, sondern unter Einhaltung von räumlichen Schutzabständen in einer Clusteranordnung wiederverwendet, wodurch die Gleichkanal-Eigenstörung drastisch vermindert wird.

Ein Charakteristikum des JD-CDMA-Verfahrens ist es, daß die wenigen Signalquellen (ca. 8 bis 10), die jeweils pro Nutzfrequenzband betrieben werden, mit bekannten Spreizcodes arbeiten, die den Teilnehmern jeweils für die Dauer einer Verbindung zugeteilt sind. Weiterhin erfolgt die Übertragung in Funkblöcken, wobei in jedem Funkblock eine verbindungsindividuelle Trainingssequenz übertragen wird, die der Messung des aktuellen Kanalzustands dient. Im Empfänger ist eine JD-spezifische Signaldetektionseinheit angeordnet, die in der Lage ist, alle Signalquellen, die im Summen-Empfangssignal enthalten sind, parallel zu errechnen und deren Energieanteile zu bestimmen. Mit Hilfe der aus den Trainingssequenzen gewonnenen Detektions-Operatoren der einzelnen Signalquellen werden nachfolgend deren Informationsanteile pro Funkblock ermittelt.

Als wesentlicher Unterschied zum DS-CDMA-Verfahren werden die einzelnen Nutzsignale nicht durch Einzelkorrelationen detektiert.

Die Einzelkorrelation ergibt Störungen durch alle anderen gleichzeitig empfangenen Signale. Dieser Nachteil wird beim JD-Verfahren durch die gleichzeitige Detektion aller gewünschten Signale minimiert, und somit ist diese Art der Detektion in erster Näherung frei von gegenseitigen Störungen der Nutzsignale. Die Qualität der Detektion beim JD-Verfahren wird mit steigender Teilnehmerzahl bei gleicher Spreizbandbreite jedoch vermindert, und auch Störeinflüsse durch Rauschen sowie Fehler in der Kanalschätzung haben eine qualitätsmindernde Wirkung.

Durch die Verringerung des Spreizfaktors von etwa 100 beim DS-CDMA auf z.B. 8 beim JD-CDMA verringert sich der Korrelationsgewinn natürlich von 18 dB auf 9 dB. Aufgrund der speziellen vorgeschriebenen Detektionsart ist es nunmehr aber im Gegensatz zu einem DS-CDMA Verfahren nicht mehr erforderlich, daß auch die Empfangspegel in einem Toleranzbereich von < 9dB liegen müssen. Es ist ein wesentliches Merkmal des Joint-Detection- Verfahrens, daß die wenigen Signalquellen bis zu 20 bis 30 dB unterschiedlich sein dürfen, ohne die Sicherheit der Detektion zu gefährden.

Durch die für das JD-Verfahren zulässigen großen Unterschiede der Empfangspegel entfällt die beim DS-Verfahren unerläßliche extrem schnelle und exakte Empfangspegelregelung, was zu einem deutlich einfacheren Regelmechanismus führt. Da weiterhin beim JD-Verfahren die räumlichen Schutzabstände für die Wiederbenutzung der Funkkanäle zur deutlichen Verringerung der Gleichkanalstörung eingehalten werden, entfällt auch der für das DS-Verfahren notwendige extrem schnelle und exakt arbeitende Verbindungs-Umschaltmechanismus (Soft Handover) und die damit verbundene hohe Systemkomplexität sowie der diesbezügliche hohe Aufwand. Die Umschaltung von Verbindungen findet beim JD-CDMA-Verfahren in gleicher Weise in den Funkvermittlungsstellen statt wie bei den gegenwärtig eingesetzten Mobilfunksystemen. Für das JD-Verfahren ist es deshalb typisch, daß alle verfügbaren Kanäle für die realen Verbindungen genutzt werden können.

Beim JD-Verfahren bleibt jedoch genauso wie bei den heute in Betrieb befindlichen Mobilfunksystemen eine Restwahrscheinlichkeit von wenigen Prozent, daß Gleichkanalstörungen, die durch Überreichweiten von im Wiederbenutzungsabstand betriebenen Funkeinrichtungen entstehen können, die Detektion und die Trennung der einzelnen Signalquellen erschweren. Aufgrund der geringen Teilnehmerzahlen von z.B. acht pro Nutzfrequenzband, der Clusterbildung und der daraus resultierenden Wiederbenutzungsabstände handelt es sich dabei jedoch immer nur um einzelne bzw. wenige Störer.

Der Erfindung liegt die Aufgabe zugrunde, ein Verfahren anzugeben, das es gestattet, die Gleichkanalstörungen, die zwischen den Funkzellen z.B. aufgrund von Überreichweiten auftreten, bei der Signalauswertung zu berücksichtigen, um damit mit systemtechnischen Maßnahmen Detektionsfehler wirkungsvoll zu reduzieren. Eine wirkungsvolle Reduzierung der Gleichkanalstörungen eröffnet gleichzeitig die Möglichkeit, das Clustermaß bzw. die Zahl der zur Versorgung eines bestimmten Funkbereichs erforderlichen Basisstationen durch systemtechnische Maßnahmen weiter zu vermindern. Die Erfindung soll auch eine Anordnung angeben, mit welcher sich ein solches Verfahren ohne großen zusätzlichen Aufwand durchführen läßt.

Erfindungsgemäß wird diese Aufgabe durch die im kennzeichnenden Teil des Patentanspruchs 1 angegebenen Merkmale gelöst.

Zweckmäßige und vorteilhafte Weiterbildungen der Erfindung ergeben sich aus den Unteransprüchen.

Anordnungen zur Durchführung des Verfahrens nach der Erfindung sind in den Patentansprüchen 14 und 15 angegeben.

Zur Lösung der Aufgabe werden nach der Erfindung die Signaldetektions-Eigenschaften des JD-Verfahrens benutzt, um systemeigene Störsignale, die durch die Signalquellen der im Gleichkanal-Wiederbenutzungsabstand in anderen Funkzellen operierenden Einrichtungen verursacht werden und so stark sind, daß die Zuverlässigkeit der Signaldetektion gefährdet ist, bei der Signaldetektion in der gleichen Weise zu detektieren wie dies bei den erwünschten Signalquellen der Fall ist, um damit diese Störsignale von den Nutzsignalen zu eliminieren.

Nach der Erfindung werden den Empfangseinrichtungen der Funkstationen in einer Funkzelle auch Spreizcodes und/oder Trainingssequenzen von nächstumgebenden, im Gleichkanal-Wiederbenutzungsabstand befindlichen Basisstationen mitgeteilt, um damit Störsignale gezielt erkennen und eliminieren zu können. Diese Spreizcodes und/oder Trainingssequenzen können den Empfangseinrichtungen der Funkstationen fortlaufend und in codierter Form entweder in einem Organisationskanal oder zusätzlich mit der Trainings sequenz über die Verkehrskanäle übermittelt werden.

Da es für das JD-Verfahren aber typisch ist, daß die Sicherheit der Signaldetektion mit steigender Anzahl von Signalquellen pro Nutzfrequenzband abnimmt, ist abzuschätzen, wie hoch die durch Überreichweiten verursachte Wahrscheinlichkeit von Gleichkanal-Störungen ist.

Im folgenden wird die Erfindung noch anhand von Figuren erläutert.

Es zeigen:
- Fig. 1: die Darstellung eines Verlaufs von Verteilungswahrscheinlichkeiten mit der bereits im Eingangsteil der Beschreibung geschilderten Ausgangssituation einer verhältnismäßig weiträumigen Durchdringung der unter Einfluß der Funkfelddämpfung entstehenden relativen Empfangspegel Pₑ für den Funkversorgungsbereich zweier benachbarter das gleiche Nutzfrequenzband benutzender Basisstationen,
- Fig. 2: eine zur Fig. 1 analoge Darstellung eines Verlaufs von Verteilungswahrscheinlichkeiten bei einem System mit drei Basisstationen, wobei sich das gleiche Frequenzband erst in der jeweils übernächsten Funkzelle wiederholt,
- Fig. 3: ein schematisch dargestelltes, mit typischem Gleichwellen-Störszenario behaftetes Funkzellen-Ausführungsbeispiel eines Mobilfunksystems zur Durchführung des Verfahrens nach der Erfindung,
- Fig. 4: ein Übersichtsblockschaltbild einer Anordnung zur Durchführung des Verfahrens nach der Erfindung, und
- Fig. 5: eine gemäß dem Verfahren nach der Erfindung arbeitende Anordnung für die Signaldetektion in einem JD-Ubertragungsweg.

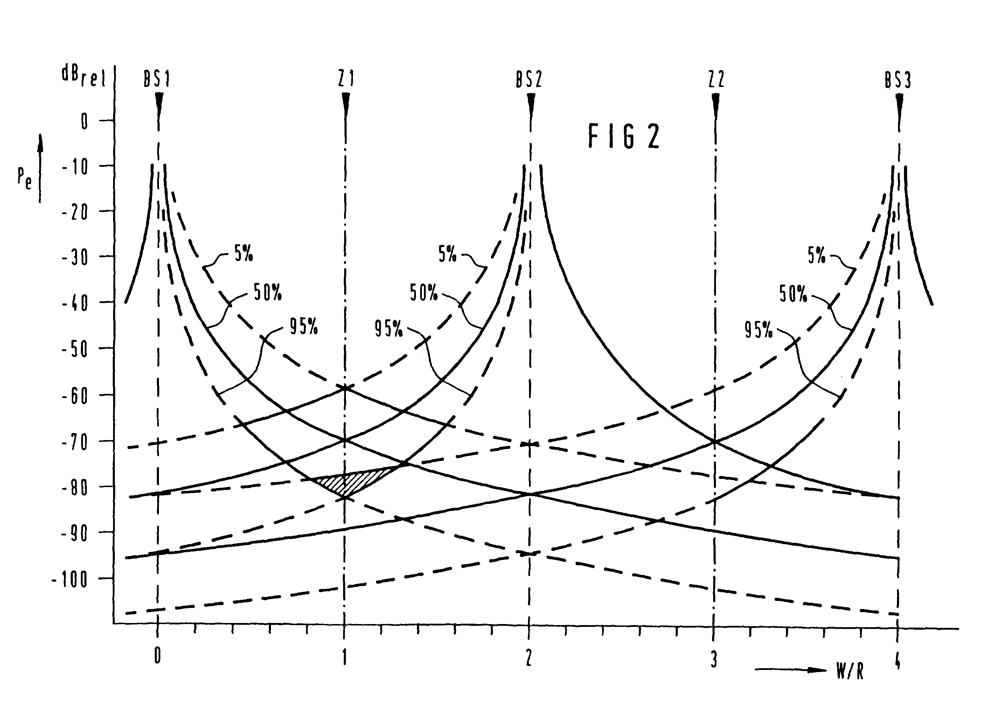

Fig. 2 zeigt in Analogie zu Fig. 1 wiederum den Verlauf der Verteilungswahrscheinlichkeit und die gegenseitige Durchdringung der unter Einfluß der Funkfelddämpfung entstehenden relativen Empfangspegel Pₑ (dBᵣₑₗ) für den Funkversorgungsbereich von drei Basisstationen BS1, BS2 und BS3. Allerdings erfolgt hier, wie bei Clusterbildung üblich, die Benutzung des gleichen Frequenzbandes ausschließlich nur in den Basisstationen BS1 und BS3. In der dazwischen liegenden Basisstation BS2 wird ein anderes Frequenzband verwendet. Der Zellradius R bezeichnet die Zellgrenze Z1 zwischen den Basisstationen BS1 und BS2 bzw. die Zellgrenze Z2 zwischen den Basisstationen BS2 und BS3. W ist der Gleichkanal-Wiederbenutzungsabstand.

Als Konsequenz der Clusterbildung ergibt sich nun ein sehr kleiner Gleichwellen-Überschneidungsbereich, der wiederum durch Schraffierung hervorgehoben ist. Es muß festgestellt werden, daß der in Fig. 2 dargestellte Fall der Wiederholung des gleichen Frequenzbandes in der übernächsten Zelle den wirtschaftlich sehr günstigen Fall eines Clusters mit nur vier Zellen darstellt. Bei mehr Funkzellen pro Cluster wird der Gleichwellen-Überschneidungsbereich und damit die Gleichkanal-Störungswahrscheinlichkeit immer geringer.

Bei Betrachtung der Pegelrelationen, die in Fig. 2 zum Überschneidungsbereich führen, fällt auf, daß nur für solche Mobilstationen, die am äußersten Ende des Versorgungsbereichs der Basisstation BS1 operieren und gleichzeitig an Orten hoher Abschattungsdämpfung (95%-Linie) der Basisstation BS1 sowie an Orten geringer Abschattungsdämpfung (5%-Linie) der Basisstation BS3 sind, eine Störungsmöglichkeit besteht. Die Wahrscheinlichkeit w, daß eine solche Störung in diesem Grenzbereich auftritt, beträgt, wenn man volle Korrelation dieser beiden Zustände annimmt, w = o,o5 = 5%, wenn man im ungünstigsten Fall annimmt, daß immer dann, wenn der Empfangspegel der Signale der Basisstation BS1 am Empfangsort auf den 95%-Wert absinkt, die Signale der Basisstation BS3 den 5%-Wert erreichen und damit Störungen verursachen. Da beim JD-Verfahren aber maximal nur acht in der gesamten Funkzelle verteilte Empfangs stationen in einem Frequenzband operieren, werden selbst in diesem Fall meistens nur einzelne Empfangsstationen betroffen. Da weiterhin aber die Signale der Basisstation BS2 typischerweise aus der gleichen Richtung eintreffen wie die Signale der Basisstation BS3, darf zwischen diesen beiden Signalen unterschiedlicher Frequenzen wegen der Gleichheit der Abschattungshindernisse eine hochprozentige Korrelation hinsichtlich der Abschattungdämpfung angenommen werden. Dies führt dazu, daß eine Empfangsstation, z.B. eine Mobilstation, die eine Verbindung mit der Basisstation BS1 hat und durch die Basisstation BS3 gestört wird, in den weitaus meisten Fällen im Rahmen ihrer systeminternen Uberwachungsprozeduren bereits vorher festgestellt hat, daß der Empfangspegel von der Basisstation BS2 sehr viel höher ist (c. 5%-Wert) als derjenige von der Basisstation BS1 (siehe Fig. 2), und eine ganz normale Verbindungsumschaltung zur Basisstation BS2 einleitet. Sobald die Situation einer Mobilstation so ist, daß keine Korrelation zwischen der Abschattungsdämpfung der Basisstationen BS2 und BS3 besteht, wofür es eine bestimmte Restwahrscheinlichkeit gibt, können Störungen der oben genannten Art auftreten, die im Grenzfall zum Ausfall von acht Verbindungen führen würden und durch das Verfahren nach der Erfindung verhindert werden.

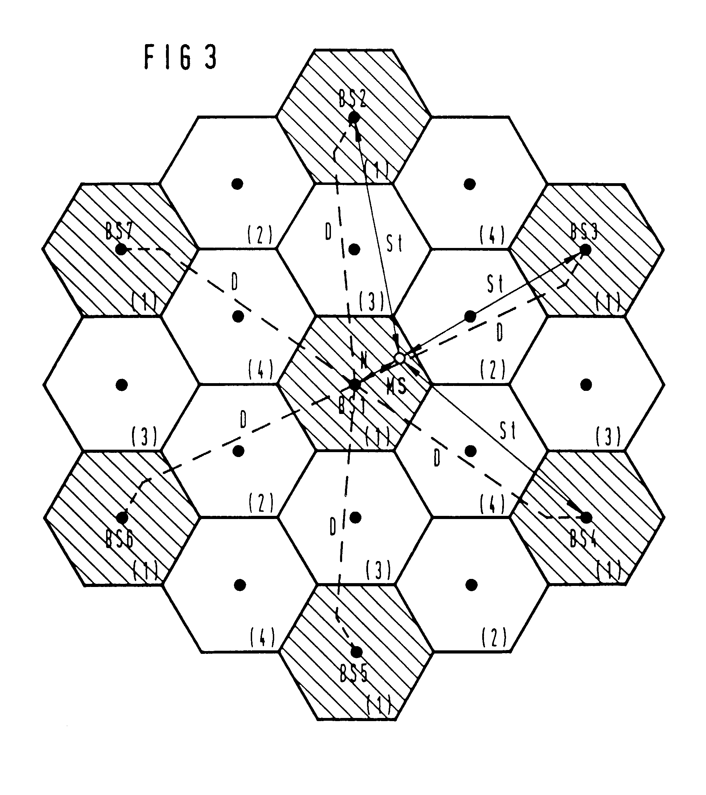

Das Verfahren nach der Erfindung wird im folgenden anhand eines in Fig. 3 dargestellten Ausführungsbeispiels eines mit typischem Gleichwellen-Störszenario behafteten zellularen Funkfeldes zur Durchführung des Verfahrens näher erläutert.

Bei der in Fig. 3 dargestellten Anordnung sind die Funkzellen in Clustern von vier Zellen pro Cluster angeordnet. Dies bedeutet, daß das gesamte zur Verfügung stehende Frequenzband in geeigneter Form z.B. gleichmäßig auf vier Funkzellen verteilt und beliebig wiederholt werden kann. So stehen allen Funkzellen, die jeweils die gleiche Zahl (1), (2), (3), (4) tragen, jeweils die gleichen Frequenzbänder zur Verfügung. Die weiteren Betrachtungen beziehen sich auf die schraffierten Funkzellen mit der Zahl (1); sie gelten aber für die anderen Funkzellen jeweils gleicher Zahlen in gleicher Weise. Aus Fig. 3 ist ersichtlich, daß die zentrale schraffierte Zelle mit der Basisstation BS1 sechs Nachbarzellen mit den Basisstationen BS2 bis BS7 hat, die sie im Gleichkanal-Wiederbenutzungsabstand von je zwei Zellen umgeben. In jeder Zelle bzw. Basisstation werden pro Frequenzband z.B. acht Signalquellen gleichzeitig, aber mit unterschiedlichen Spreizcodes übertragen. Eine nahe am Zellenrand operierende Mobilstation MS, die mit der Basisstation BS1 eine Nutzverbindung N unterhalt, kann beispielsweise durch drei Gleichwellenzellen (1) Störungen St erleiden. Störungen St können im Beispiel hauptsächlich zwischen der Mobilstation MS und den drei Basisstationen BS2, BS3 und BS4 auftreten.

Entsprechend der Eigenschaft des JD-Verfahrens, unerwünschte Signale aus den erwünschten Signalen der eigenen Zelle ohne wesentliche Eigenstörung zu eliminieren, können nach der Erfindung auch Störsignale von Nachbarzellen, welche die Signaldetektion gefährden, bei der Signaldetektion erkannt und aus dem gewünschten Signal eliminiert werden. Voraussetzung hierfür ist jedoch, daß die betroffene Mobilstation MS sowie die Basisstation BS1, mit der sie in Verbindung ist, Kenntnis von den Spreizcodes haben, die in den störende Funkzellen benutzt werden. Es ist auch möglich, daß in der Mobilstation eine Mehrzahl von verwendeten Spreizcodes gespeichert ist und ihr mitgeteilt wird, welche Untermengen der gespeicherten Spreizcodes sie verwenden soll.

Die jeweils in allen Basisstationen BS2 bis BS7 benutzten Spreizcodes werden aus diesem Grunde nach der Erfindung laufend oder bei Veränderungen an die zentrale Basisstation BS1 über Datenverbindungen D mitgeteilt. Die Basisstationen übermitteln diese Informationen entweder direkt oder in einer codierten Form im Rahmen von systemeigenen Aktualisierungsroutinen oder als Zusatz zur Trainingssequenz fortlaufend, oder bei Bedarf allen in ihrer Zelle operierenden Mobilstationen. Alle in den schraffiert dargestellten Zellen der Basisstationen BS2 bis BS7 operierenden Mobilstationen, die aus Gründen der Übersichtlichkeit nicht dargestellt sind, können natürlich in den Empfangseinrichtungen der Basisstation BS1 mit der oben erläuterten geringen Wahrscheinlichkeit (siehe Fig. 2) Störungen verursachen, die mit dem JD-Verfahren eliminiert werden können. Mit der Mitteilung der im Wiederbenutzungsabstand verwendeten Spreizcodes sind sowohl die Empfangseinrichtungen der Basisstation BS1 wie auch der in ihrem Versorgungsbereich operierenden Mobilstationen in die Lage gesetzt, Störungen zu eliminieren und Unterbrechungen, wie sie beim DS-CDMA-Verfahren vom Prinzip her auftreten können, zu vermeiden.

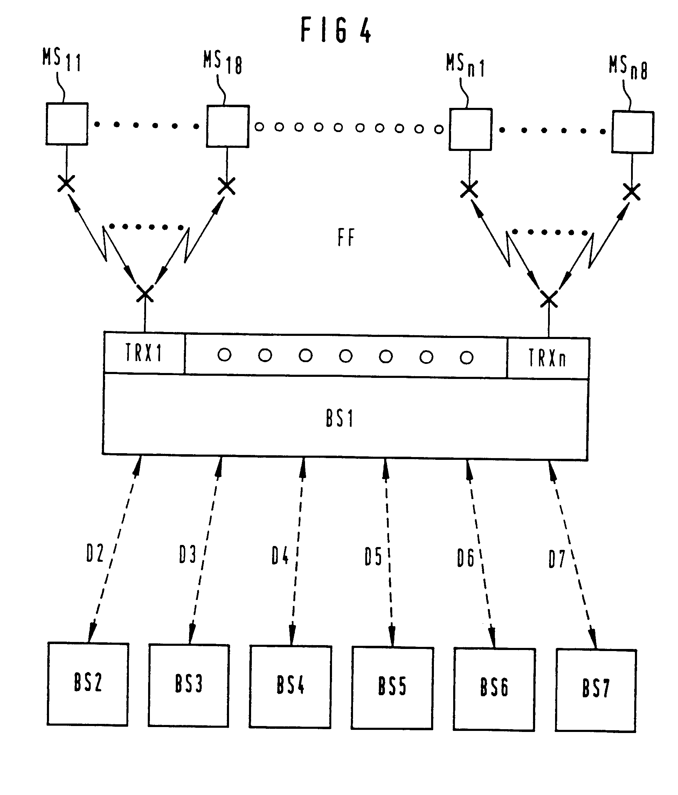

Fig. 4 zeigt ein Blockschaltbild einer Anordnung zur Durchführung des Verfahrens nach der Erfindung. Die Basisstation BS1 besitzt eine Reihe von Sende-Empfangseinrichtungen TRX1 bis TRXn. Jeder dieser Einrichtungen ist ein Spreizband für die Senderichtung und ein entsprechendes Empfangsband zugeordnet. Jede Empfangseinrichtung TRX1 bis TRXn bedient z.B. gleichzeitig acht Mobilstationen MSll bis MS18, bzw. MSnl bis MSn8 über das Funkfeld FF. Die umgebenden Gleichkanal-Basisstationen BS2 bis BS7 besitzen Datenverbindungen D2 bis D7 zur Basisstation BS1, über welche die jeweils benutzten Spreizbänder gegenseitig aktualisiert werden.

Die in Fig. 3 und Fig. 4 dargestellten Anordnungen können unter Beibehaltung des Grundschemas beliebig erweitert, d.h. auf beliebig große Flächen bei Vergrößerung der Zellenzahl ausgedehnt werden. Für das Verfahren nach der Erfindung muß dabei gewährleistet sein, daß jede Basisstation zu den sie umgebenden gleichfrequenten Basisstationen eine Datenverbindung besitzt. Diese Datenverbindungen bestehen bei modernen Netzen bereits aus Gründen der Verbindungsumschaltung (Handover) und brauchen deshalb nicht extra für die Mitteilung der jeweils benutzten Kanäle installiert werden.

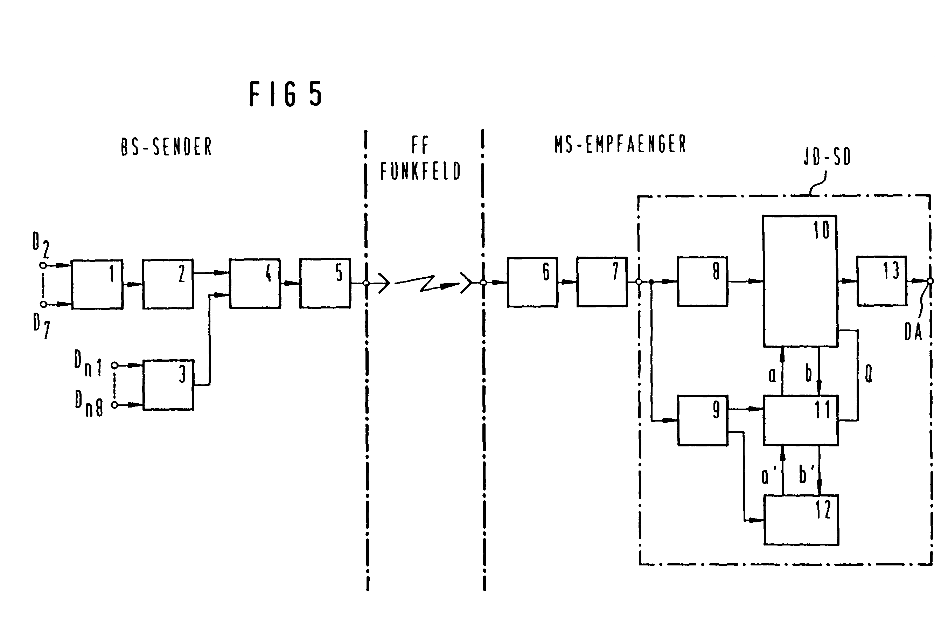

Fig. 5 zeigt ein Blockschaltbild einer JD-Übertragungsstrecke mit einer erfindungsgemäßen Ausbildung der sendeseitigen Einrichtungen in einer Basisstation BS sowie der empfangsseitigen Einrichtungen in einer Mobilstation MS. Die Spreizcodes der gleichfrequenten umgebenden Funkzellen, die über die Datenleitungen D1 bis D7 zur Basisstation BS geführt sind, werden im Signalkombinierer 1 kombiniert und in die BCCH-Steuereinheit 2 (BCCH = Broadcast Control Channel) geführt, in der auch die in der eigenen Funkzelle benutzten Spreizcodes einprogrammiert sind. Die Nutzdaten Dnl bis Dn8 aller von der Basisstation BS bedienten Teilnehmer, deren Übertragung über die sogenannten Verkehrskanäle (Traffic Channels = TCH) erfolgt, werden parallel in der Verarbeitungseinheit 3 codiert und in ein Blockformat gebracht, in welches auch die unterschiedlichen Trainingssequenzen zur Unterscheidung der TCH-Verkehrskanäle eingebettet sind. Nachfolgend werden diese Signalblöcke zusammen mit den ebenfalls entsprechend aufbereiteten Signalen der BCCH-Steuereinheit 2 zu einer JD-Bandspreiz-Einheit 4 geführt und über einen HF-Sender 5 ausgesendet. Der Empfänger besteht aus dem Hochfrequenzteil 6, dem ein A/D-Wandler 7 mit digitalem Filter nachgeschaltet ist. Die Ausgangssignale des A/D-Wandlers 7 werden einer JD-Signaldetektionseinheit JD-SD zugeführt. Die JD-Signaldetektionseinheit JD-SD besteht aus parallelen Signal-Arbeitsspeichern 8 und 9, einem JD-Signaldetektor 10, einem Kanalschätzer 11, einem Störungsdetektor 12 sowie einem Datendecoder 13.

Die Empfangsfähigkeit einer Mobilstation MS und die Signalübertragung zwischen der Basisstation BS und der Mobilstation MS wird folgendermaßen erreicht: Eine betriebsbereite Mobilstation MS empfängt routinemäßig den BCCH-Kanal. Aus den empfangenen, im Signal-Arbeitsspeicher 9 zwischengespeicherten Funkblocksignalen des BCCH-Kanals, die mit vorvereinbarten Trainingssequenzen gesendet werden, ermittelt der Kanalschätzer 11 die Empfangsphase und das Kanalmodell und setzt damit über die Verbindung a den JD-Signaldetektor 10 in die Lage, die Informationsteile der Blöcke des BCCH-Kanals aus dem Signal-Arbeitsspeicher 8 zu detektieren. Der JD-Signaldetektor 10 detektiert nun im ersten Schritt aus den Informationen des BCCH-Kanals die Codes der Nutzdatenverbindungen der eigenen Basisstation BS und gibt diese Informationen über die Verbindung b zum Kanalschätzer 11. Damit ist nun der Kanalschätzer 11 in der Lage, sämtliche in der eigenen Zelle benutzten Trainingssequenzen bzw. Spreizcodes zu erkennen und gibt diese Informationen zusammen mit den Kanalmodellen über die Verbindung a wiederum an den JD-Signaldetektor 10. Der JD-Signaldetektor 10 detektiert nunmehr nach dem JD-Detektions-Prinzip die Nutzdaten und generiert ein Qualitätskriterium für das jeweils gewünschte Signal. Kann ausreichende Qualität trotz Detektion und Eliminierung der bekannten Signale bei ausreichendem Geräuschabstand nicht erreicht werden, so liegt eine Eigenstörung durch Frequenzwiederbenutzung in benachbarten Funkzellen nach FIG 3 vor. Dieser Sachverhalt wird dem Kanalschätzer 11 durch das Qualitätskriterium Q mitgeteilt, der nunmehr über die Verbindung b' den erfindungsgemäß eingebrachten Störungsdetektor 12 zur Auswertung der im Signal-Arbeitsspeicher 9 vorhandenen zusätzlichen BCCH-Informationen über die in den gleichfrequenten Nachbarzellen benutzten Spreizcodes veranlaßt. Diese Informationen, die nach Fig. 4 von den entsprechenden Basisstationen BS2 bis BS7 über die Datenleitungen D2 bis D7 an die Basisstation BS1 übertragen werden, sind im Signalkombinierer 1 der Basisstation BS zusammengefaßt, werden im BCCH (z.B. nach dem GSM-Protokoll) übertragen und sind im Signal-Arbeitsspeicher 9 gespeichert. Die Spreizcodes der Störquellen, die im Störungsdetektor 12 erkannt sind, werden dem Kanalschätzer 11 über die Verbindung a' mitgeteilt, worauf dieser den Pegel und das Kanalmodell ermittelt und diese Informationen zusätzlich an den JD-Signaldetektor 10 leitet. Der JD-Signaldetektor 10 ist nunmehr in der Lage die Störer gezielt zu detektieren und zu eliminieren. Dieser stabile Zustand der Detektion wird durch das Qualitätskriterium Q bestätigt und dem Kanalschätzer 11 mitgeteilt. Sobald sich dieser stabile Zustand z.B. durch die Bewegung der Mobilstationen ändert, was sich durch das Absinken der Detektionsqualität Q bemerkbar macht, wird auf die beschriebene Weise eine erneute Ermittlung der Störsituation und deren Eliminierung erfolgen. Die gewünschten Ausgangsdaten des JD-Signaldetektors 10 werden zum Datendecoder 13 geführt und stehen an dessen Datenausgang DA als Nutzdaten zur Verfügung.

Prinzipiell könnte der JD-Signaldetektor 10 natürlich alle in den Gleichkanal-Nachbarzellen benutzten Codes immer automatisch detektieren. Dadurch würde sich aber die Rechenleistung im JD-Signaldetektor 10 drastisch erhöhen, was zu einer deutlichen Steigerung des Stromverbrauchs bzw. zur entsprechenden Verkürzung der Operationszeit von Mobilstationen ohne Batteriewechsel führen würde.

Die empfangsseitigen Einrichtungen in der Basisstation BS entsprechen in erster Näherung denen der Mobilstation MS, besitzen aber mehrere parallele Datenausgänge DA, die der Zahl der betriebenen Nutzverbindungen (z.B. acht) gleich ist. Im Sendeteil der Mobilstation MS wird jedoch nur eine Datenverbindung in den Sendeweg eingeführt.

## Patentansprüche

1. Verfahren zur Verminderung von Gleichkanalstörungen in den Empfangseinrichtungen von Basis- und Teilnehmerstationen (BS1,MS) eines zellular aufgebauten Funksystems, in welchem Funkzellen mit frequenzgleichen Funkkanälen benutzt werden und die Übertragung der Signale unter Anwendung des sogenannten JD-CDMA (Joint Detection - Code Division Multiple Access = Codemultiplex mit verbundener Detektion)-Verfahrens vorgenommen wird, bei dem eine Vielzahl von Nutzverbindungen (N) im gleichen HF-Frequenzband parallel abgewickelt wird, wozu die Nutzsignale mit jeweils einem unterschiedlichen Spreizcode um einen bestimmten Faktor in der Frequenzachse gespreizt und am Empfangsort unter Verwendung dieses Spreizcodes wieder decodiert werden, und bei dem in den Empfangseinrichtungen zur Signaldetektion jeweils eine sogenannte JD-CDMA-spezifische Signaldetektionseinheit (JD-SD) verwendet wird,
**dadurch gekennzeichnet,**
daß in einer Funkzelle in den jeweiligen Empfangseinrichtungen beim Decodieren zumindest teilweise diejenigen Spreizcodes berücksichtigt werden, die in mindestens einer anderen Funkzelle verwendet werden, die das gleiche Frequenzband benutzt.

2. Verfahren nach Anspruch 1,
**dadurch gekennzeichnet,**
daß die in der mindestens einen anderen Funkzelle verwendeten Spreizcodes zur Teilnehmerstation (MS) übertragen werden.

3. Verfahren nach Anspruch 2,
**dadurch gekennzeichnet,**
daß die Spreizcodes im Rahmen von Trainingssequenzen in Funkblöcken übertragen werden.

4. Verfahren nach Anspruch 2,
**dadurch gekennzeichnet,**
daß die Übertragung der Spreizcodes im Rahmen von Organisationsprozeduren erfolgt.

5. Verfahren nach Anspruch 4,
**dadurch gekennzeichnet,**
daß die Übertragung über einen an alle Teilnehmerstationen (MS) gerichteten Kanal (BCCH) erfolgt.

6. Verfahren nach Anspruch 4,
**dadurch gekennzeichnet,**
daß die Übertragung über einen zur Teilnehmerstation (MS) gerichteten Verkehrskanal (TCH) erfolgt.

7. Verfahren nach Anspruch 6,
**dadurch gekennzeichnet,**
daß die Übertragung der Spreizcodes zur Basisstation (BS1) einer Funkzelle von den Basisstationen (BS2...BS7) in den anderen Funkzellen über Datenleitungen (D2...D7) erfolgt.

8. Verfahren nach einem der Ansprüche 2 bis 7,
**dadurch gekennzeichnet,**
daß für die Übertragung die in bestehenden Funksystemen vorhandenen Vermittlungs- und Übertragungseinrichtungen verwendet werden.

9. Verfahren nach Anspruch 1,
**dadurch gekennzeichnet,**
daß die in den anderen Funkzellen verwendeten Spreizcodes in der Teilnehmerstation (MS) gespeichert und mindestens teilweise für die Detektion verwendet werden.

10. Verfahren nach Anspruch 9,
**dadurch gekennzeichnet,**
daß zur Teilnehmerstation (MS) Signale übertragen werden, die aus den in der Teilnehmerstation (MS) gespeicherten Spreizcodes diejenigen Spreizcodes auswählen, die für die Detektion verwendet werden sollen.

11. Verfahren nach einem der Ansprüche 1 bis 10,
**dadurch gekennzeichnet,**
daß die Teilnehmerstation (MS) als Mobilstation eines Mobilfunksystems ausgebildet ist.

12. Verfahren nach einem der Ansprüche 1 bis 10,
**dadurch gekennzeichnet,**
daß die Teilnehmerstation (MS) als Feststation eines Telefonsystems ausgebildet ist.

13. Verfahren nach einem der Ansprüche 1 bis 11,
**dadurch gekennzeichnet,**
daß zumindest teilweise diejenigen Spreizcodes berücksichtigt werden, die von den nächstumgebend im Wiederholungsabstand angeordneten anderen Basisstationen (BS2,BS3,BS4) verwendet werden.

14. Anordnung zur Durchführung des Verfahrens nach Anspruch 1,
**dadurch gekennzeichnet,**
daß die Basisstationen (z.B. BS1) jeweils eine JD-Signaldetektionseinheit (JD-SD) aufweisen, die beim Decodieren zumindest teilweise diejenigen Spreizcodes berücksichtigt, die in mindestens einer anderen Funkzelle verwendet werden, die dasselbe Frequenzband benutzt.

15. Anordnung zur Durchführung des Verfahrens nach Anspruch 1,
**dadurch gekennzeichnet,**
daß in den Teilnehmerstationen (MS), z.B. in Mobilstationen, jeweils eine JD-Signaldetektionseinheit (JD-SD) vorgesehen ist, die beim Decodieren zumindest teilweise diejenigen Spreizcodes berücksichtigt, die von einer Basisstation (z.B. BS2) in zumindest einer anderen Funkzelle verwendet werden, die das gleiche Frequenzband benutzt.

## Claims

1. Method for reducing common channel interference in the reception devices of base stations and subscriber stations (BS1, MS) of a cellular radio system in which radio cells with radio channels which have the same frequency are used, and the transmission of the signals is carried out with application of the so-called JD-CDMA (Joint Detection - Code Division Multiple Access = code multiplex with associated detection) method, in which a multiplicity of useful connections (N) is processed in parallel in the same RF frequency band, for which purpose the useful signals are spread by a specific factor in the frequency axis with a different spreading code in each case, and are decoded again at the reception location using this spreading code, and in which in each case a so-called JD-CDMA-specific signal detection unit (JD-SD) is used in the reception devices for the detection of signals, characterized in that during the decoding in a radio cell, at least to a certain extent those spreading codes which are used in at least one other radio cell which uses the same frequency band are taken into account in the respective reception devices.

2. Method according to Claim 1, characterized in that the spreading codes which are used in the at least one other radio cell are transmitted to the subscriber station (MS).

3. Method according to Claim 2, characterized in that the spreading codes are transmitted in radio blocks within the scope of training sequences.

4. Method according to Claim 2, characterized in that the transmission of the spreading codes takes place within the scope of organization procedures.

5. Method according to Claim 4, characterized in that the transmission takes place via a channel (BCCH) which is directed to all the subscriber stations (MS).

6. Method according to Claim 4, characterized in that the transmission takes place via a traffic channel (TCH) which is directed to the subscriber station (MS).

7. Method according to Claim 6, characterized in that the spreading codes are transmitted to the base station (BS1) of a radio cell from the base stations (BS2...BS7) in the other radio cells via data lines (D2...D7).

8. Method according to one of Claims 2 to 7, characterized in that the switching and transmission devices which are present in existing radio systems are used for the transmission.

9. Method according to Claim 1, characterized in that the spreading codes which are used in the other radio cells are stored in the subscriber station (MS) and are used at least partially for the detection.

10. Method according to Claim 9, characterized in that signals which select from the spreading codes stored in the subscriber station (MS) those spreading codes which are to be used for the detection are transmitted to the subscriber station (MS).

11. Method according to one of Claims 1 to 10, characterized in that the subscriber station (MS) is designed as a mobile station of a mobile radio system.

12. Method according to one of Claims 1 to 10, characterized in that the subscriber station (MS) is designed as a fixed station of a telephone system.

13. Method according to one of Claims 1 to 11, characterized in that at least to a certain extent those spreading codes are taken into account which are used by the other base stations (BS2, BS3, BS4) which are arranged in a directly surrounding manner at the repetition interval.

14. Arrangement for carrying out the method according to Claim 1, characterized in that the base stations (for example BS1) each have a JD signal detection unit (JD-SD) which, during decoding, at least to a certain extent takes into account those spreading codes which are used in at least one other radio cell which uses the same frequency band.

15. Arrangement for carrying out the method according to Claim 1, characterized in that in the subscriber stations (MS), for example in mobile stations, in each case one JD signal detection unit (JD-SD) is provided which, during decoding, takes into account at least to a certain extent those spreading codes which are used by a base station (for example BS2) in at least one other radio cell which uses the same frequency band.

## Revendications

1. Procédé pour réduire des perturbations sur canal commun dans les dispositifs récepteurs de stations de base (BS1) et de stations d'abonnés (MS) d'un système radio à structure cellulaire, dans lequel on utilise des cellules radio ayant des canaux radio à fréquences communes et on effectue la transmission des signaux en utilisant le procédé dit JD-CDMA (Joint Detection - Code Division Multiple Access = détection commune et accès multiple par répartition en code) dans lequel on développe parallèlement dans la même bande de fréquences HF une pluralité de liaisons utiles (N), les signaux utiles étant étalés avec à chaque fois un code d'étalement différent d'un certain facteur dans l'axe des fréquences et étant de nouveau décodés sur le lieu de réception en utilisant ce code d'étalement, et dans lequel on utilise dans les dispositifs récepteurs pour la détection de signaux à chaque fois une unité de détection de signaux (JD-SD) spécifique au procédé JD-CDMA,
caractérisé par le fait que l'on prend en compte dans une cellule radio dans les dispositifs récepteurs respectifs lors du décodage, au moins en partie ceux des codes d'étalement qui sont utilisés dans au moins une autre cellule radio qui utilise la même bande de fréquences.

2. Procédé selon la revendication 1,
caractérisé par le fait que l'on transmet à la station d'abonné (MS) les codes d'étalement utilisés dans la ou les autres cellules radio.

3. Procédé selon la revendication 2,
caractérisé par le fait que l'on transmet les codes d'étalement dans le cadre de séquences de conditionnement dans des blocs radio.

4. Procédé selon la revendication 2,
caractérisé par le fait que la transmission des codes d'étalement s'effectue dans le cadre de procédures d'organisation.

5. Procédé selon la revendication 4,
caractérisé par le fait que la transmission s'effectue par l'intermédiaire d'un canal (BCCH) dirigé vers toutes les stations d'abonnés (MS).

6. Procédé selon la revendication 4,
caractérisé par le fait que la transmission s'effectue par l'intermédiaire d'un canal de trafic (TCH) dirigé *vers* la station d'abonné (MS).

7. Procédé selon la revendication 6,
caractérisé par le fait que la transmission des codes d'étalement vers la station de base (BS1) d'une cellule radio s'effectue des stations de base (BS2 à BS7) aux autres cellules radio par l'intermédiaire de lignes de données (D2 à D7).

8. Procédé selon l'une des revendications 2 à 7,
caractérisé par le fait que l'on utilise pour la transmission les dispositifs de commutation et de transmission présents dans des systèmes radio existants.

9. Procédé selon la revendication 1,
caractérisé par le fait que l'on mémorise dans la station d'abonné (MS) les codes d'étalement utilisés dans les autres cellules radio et que l'on utilise ces codes mémorisés au moins en partie pour la détection.

10. Procédé selon la revendication 9,
caractérisé par le fait que l'on transmet vers la station d'abonné (MS) des signaux qui sélectionnent parmi les codes d'étalement mémorisés dans la station d'abonné (MS) les codes d'étalement qui doivent être utilisés pour la détection.

11. Procédé selon l'une des revendications 1 à 10,
caractérisé par le fait que la station d'abonné (MS) est conçue comme une station mobile d'un système de radiocommunication mobile.

12. Procédé selon l'une des revendications 1 à 10,
caractérisé par le fait que la station d'abonné (MS) est conçue comme une station fixe d'un système téléphonique.

13. Procédé selon l'une des revendications 1 à 11,
caractérisé par le fait que l'on prend en compte au moins en partie ceux des codes d'étalement qui sont utilisés par les autres stations de base (BS2, BS3, BS4) disposées dans l'environnement immédiat dans les limites de la distance de répétition.

14. Dispositif pour la mise en oeuvre du procédé selon la revendication 1,
caractérisé par le fait que les stations de base (par exemple BS1) comportent chacune une unité de détection de signaux JD (JD-SD) qui prend en compte lors du décodage, au moins en partie, ceux des codes d'étalement, qui sont utilisés dans au moins une autre cellule radio qui utilise la même bande de fréquences.

15. Dispositif pour la mise en oeuvre du procédé selon la revendication 1,
caractérisé par le fait qu'il est prévu dans les stations d'abonnés (MS), par exemple dans des stations mobiles, à chaque fois une unité de détection de signaux JD (JD-SD), qui prend en compte lors du décodage, au moins en partie, ceux des codes d'étalement, qui sont utilisés par une station de base (par exemple BS2) dans au moins une autre cellule radio qui utilise la même bande de fréquences.
